Europäisches Patentamt

(19) European Patent Office

Office européen des brevets

(11) Veröffentlichungsnummer: **0 047 942**

**A2**

(12) **EUROPÄISCHE PATENTANMELDUNG**

(21) Anmeldenummer: **81106982.2**

(22) Anmeldetag: **05.09.81**

(51) Int. Cl.³: **B 60 K 17/22**
**B 60 B 35/10**

(30) Priorität: **15.09.80 DE 3034689**

(43) Veröffentlichungstag der Anmeldung:
**24.03.82 Patentblatt 82/12**

(84) Benannte Vertragsstaaten:
**AT BE DE FR GB IT NL SE**

(71) Anmelder: **DEERE & COMPANY**

**Moline Illinois 61265(US)**

(72) Erfinder: **Saemann, Karl, Dipl.-Ing.**
**Am Rosensteiner Hang 11**
**D-6720 Speyer(DE)**

(72) Erfinder: **Koegler, Hans-Jürger, Ing.grad.**
**Pommernstrasse 88**
**D-6800 Mannheim(DE)**

(72) Erfinder: **Sonns, Eugen**
**Triebstrasse 68**
**D-6805 Heddesheim(DE)**

(74) Vertreter: **Schnabel, Hartmut, Dr.-Ing. et al,**
**Am Feldrain 13**
**D-6940 Weinheim(DE)**

(54) **Landmaschine, insbesondere Traktor.**

(57) Landmaschine, insbesondere Traktor, mit mechanisch angetriebener spurverstellbarer Vorderachse, deren Trag- und Treibfunktion von baulich weitgehend voneinander getrennten, separat voneinander zu den Vorderrädern (110) verlaufenden und gesondert bezüglich Spurbreite zu verstellenden Komponenten (104, 120, 120a, 122) wahrgenommen werden. Zwei Hauptvarianten der Erfindung bestehen darin, daß das Gehäuse (100) für das zum Frontantrieb gehörige Differential- und Winkelgetriebe entweder feststehend am Tragbock (70) befestigt ist oder aber in baulich mehr oder weniger weitgehender Vereinigung mit dem Achsmittelstück (120) mit diesem zusammen pendelnd am Tragbock befestigt ist. Diese konstruktive Trennung von Trag- und Triebfunktion ermöglicht die Verwendung einer spurverstellbaren Standard-Vorderachse, wie sie insbes. in Form von Vierkant-Profilen mit doppelter Lochleiste, bei der die Profilstücke nebeneinander verschoben und mittels der Lochleiste und entsprechender Bolzen verstellt werden können, auch für extreme Belastungsanforderungen erprobt ist insbesondere hinsichtlich der Radaufstandskräfte bei größeren Spurweiten.

FIG. 1

- 1 -

## LANDMASCHINE, INSBESONDERE TRAKTOR     D-8202

Die Erfindung betrifft eine Landmaschine, insbesondere einen Traktor, mit mechanisch angetriebener spurverstellbarer Vorderachse, deren Tragachse und Seitenwellen mehrteilig und in axialer Richtung längenverstellbar ausgebildet sind, wobei zumindest die Tragachse pendelnd am Fahrzeugrahmen aufgehängt ist und das zum Frontantrieb gehörige Differential- und Winkel-Getriebe über eine vom Hauptgetriebe nach vorne geführte Welle antreibbar und etwa in Achsmitte angeordnet ist.

Eine derartige Vorderachse ist im Falle eines von der Firma Belarus (UdSSR) gefertigten Ackerschleppers bekannt. Dabei handelt es sich um eine pendelnd aufgehängte Hohlachse, in die das Frontgetriebe-Gehäuse etwa mittig integriert ist und innerhalb derer die zum Radantrieb führenden Seitenwellen verlaufen. Die im wesentlichen rund ausgebildete Hohlachse, welche die Tragfunktion übernimmt, ist links und rechts vom Achsmittelstück bzw. Frontgetriebe-Gehäuse unter Verwendung von Klemmelementen teleskopartig spurverstellbar.

Dieser anspruchsvollen Sonderkonstruktion haftet allerdings Nachteil an,daß sich das Fahrzeug bzw. die Landmaschine erheblich verteuert ohne auf der anderen Seite in bezug auf Robustheit und Lebensdauer voll zu befriedigen. Man muß vielmehr davon ausgehen, daß die Hohlachse die von den frontgetriebenen Rädern herkommende Drehmomente und Aufstellkräfte nicht
immer in wünschenswertem Maße verkraftet.

Der Erfindung liegt daher die Aufgabe zugrunde, den
bekannten Stand der Technik zu verbessern und eine
Vorderachskonstruktion zu schaffen, die einen mechanischen Antrieb für alle wählbaren Spurbreiten gestattet unter Verwendung bereits vorhandener in bezug
auf ihre Robustheit erprobter Komponenten, gewissermaßen nach dem Baukastenprinzip.

Diese Aufgabe wird ausgehend von einer Landmaschine
der eingangs genannten Art gemäß der Erfindung dadurch gelöst, daß Trag- und Treibfunktion der Vorderachse von baulich weitgehend voneinander getrennten,
separat voneinander zu den Vorderrädern verlaufenden
und gesondert bezüglich Spurbreite zu verstellenden
Komponenten wahrgenommen werden.

Diese konstruktive Trennung von Trag- und Triebfunktion ermöglicht die Verwendung einer spurverstellbaren Standard-Vorderachse, wie sie insbesondere in
Form von Vierkant-Profilen mit doppelter Lochleiste,
bei der die Profilstücke nebeneinander entlang einer
gemeinsamen Seitenfläche verschoben und mittels der
Lochleiste und entsprechender Bolzen verstellt werden
können, auch für extreme Belastungsanforderungen erprobt ist insbesondere hinsichtlich der Radaufstandskräfte bei größeren Spurweiten.

Eine bevorzugte Ausführungsform der Erfindung zeichnet sich dadurch aus, daß das zur Vorderachse gehörige Achsmittelstück pendelnd am Tragbock befestigt ist und Anschlüsse für eine linke und rechte Halbachse aufweist, und daß in unmittelbarer Nachbarschaft, jedoch wahlweise getrennt, ein Gehäuse für das Differential- und Winkelgetriebe vorgesehen ist, dessen linke und rechte Antriebswellen getriebe- und radseitig gelenkig angeschlossen sind und außerhalb sowie etwa parallel zur tragenden Achskonstruktion verlaufen.

Bei einer spurverstellbaren mechanisch angetriebenen Vorderachse gemäß der Erfindung ergeben sich damit folgende Vorteile:

- Es wird von überwiegend schon erprobten und vorhandenen Bauelementen ausgegangen;

- Damit gestaltet sich die Fertigung einfacher und wirtschaftlicher und kommt bezüglich der Produktion verschiedener Typen mit einer weit geringeren Anzahl von Bauelementen aus;

- Die Spurverstellbarkeit gestaltet sich übersichtlicher und einfacher und vor allem zuverlässiger im Vergleich zur Teleskop-Hohlachse;

- Die robuste Tragachs-Konstruktion gewährleistet lange Lebensdauer bei höchster Beanspruchbarkeit;

- Die im Gegensatz zur intergrierten Hohlachse leichte Zugänglichkeit der Antriebskomponenten erleichtert einen etwa notwendigen Austausch einzelner Teile erheblich.

Zwar sind spurverstellbare vordere Halbachsen, insbesondere auch mit Vierkant-Querschnitt (vgl. DE-AS 10 90 894) ebenso seit Jahrzehnten bekannt wie etwa teleskopartig verstellbare Antriebswellen, insbesondere auch mit Kreuzgelenk-Anschluß (vgl. DE-AS 10 70 936, Fig. 1a), jedoch hat das Vorhandensein dieser Komponenten offensichtlich die erfindungsgemäße Konzeption nicht nahegelegt, vielmehr sind in letzter Zeit die Hohlachskonstruktionen aufwendiger gestaltet worden oder aber es wurde in Verbindung mit einer robusten spurverstellbaren Standard-Vorderachse ein hydraulischer Antrieb der Vorderräder bevorzugt.

Bei einer weiter bevorzugten Ausführungsform der Erfindung ist das Vorderachsmittelstück pendelnd am Tragbock befestigt. Zwei Hauptvarianten der Erfindung bestehen darin, daß das Gehäuse für das zum Frontantrieb gehörige Differential- und Winkelgetriebe entweder feststehend am Tragbock befestigt ist oder aber in baulich mehr oder weniger weitgehender Vereinigung mit dem Achsmittelstück mit diesem zusammen pendelnd am Tragbock befestigt ist. Die erstgenannten Lösung mit feststehendem Getriebegehäuse ist kostengünstiger herstellbar, die zweitgenannte Lösung ist bezüglich der Beanspruchung der Antriebswellen die noch robustere. Da im zweitgenannten Falle Tragachse und Antriebswelle gemeinsam um denselben Punkt pendeln, gestaltet sich der Übergang auf die anzutreibenden Räder verhältnismäßig einfach. Tragachse und Treibachse (Seitenwellen) laufen praktisch parallel zueinander. Außerdem läßt sich Achsmittelstück und Getriebegehäuse baulich vereinigt als ein Stück gießen und weist dann
links und rechts angegossene Achanschlußstücke für
die Halbachsen auf.

Im Falle einer Trennung von Achsmittelstück und Getriebegehäuse und einer starren Befestigung des
letzteren am Tragbock wird die Pendelachse gewichtsmäßig entlastet. Es muß aber in diesem Falle auf
einen besonders leichtgängigen Längenausgleich der
Antriebswellen, insbesondere unter Verwendung von
Wälzkörpern, geachtet werden. In diesem Fall ist der
Verlauf von Tragachse und Treibachse nur in grober
Näherung als parallel zueinander zu bezeichnen.

Weitere vorteilhafte Ausführungsformen der Erfindung
sind in den Unteransprüchen gekennzeichnet.

Im folgenden wird die Erfindung anhand eines Ausführungsbeispiels näher erläutert, aus dem sich weitere
Vorteile und Merkmale der Erfindung ergeben. In der
zugehörigen Zeichnung zeigt

Fig. 1    eine Ansicht der Vorderachse von vorn,
          wobei das Getriebegehäuse feststehend
          und das davon getrennte Achsmittelstück pendelnd am Tragbock befestigt
          sind,

Fig. 2    eine Ansicht der in Fig. 1 gezeigten
          Ausführungsform von unten,

Fig. 3        eine Ansicht von unten wie Fig. 2,
              jedoch ist die Position der An-
              triebswellen gegenüber der Ausfüh-
              rungsform nach Fig. 1 und 2 geändert,

Fig. 4        eine Variante des Achsmittelstückes zu

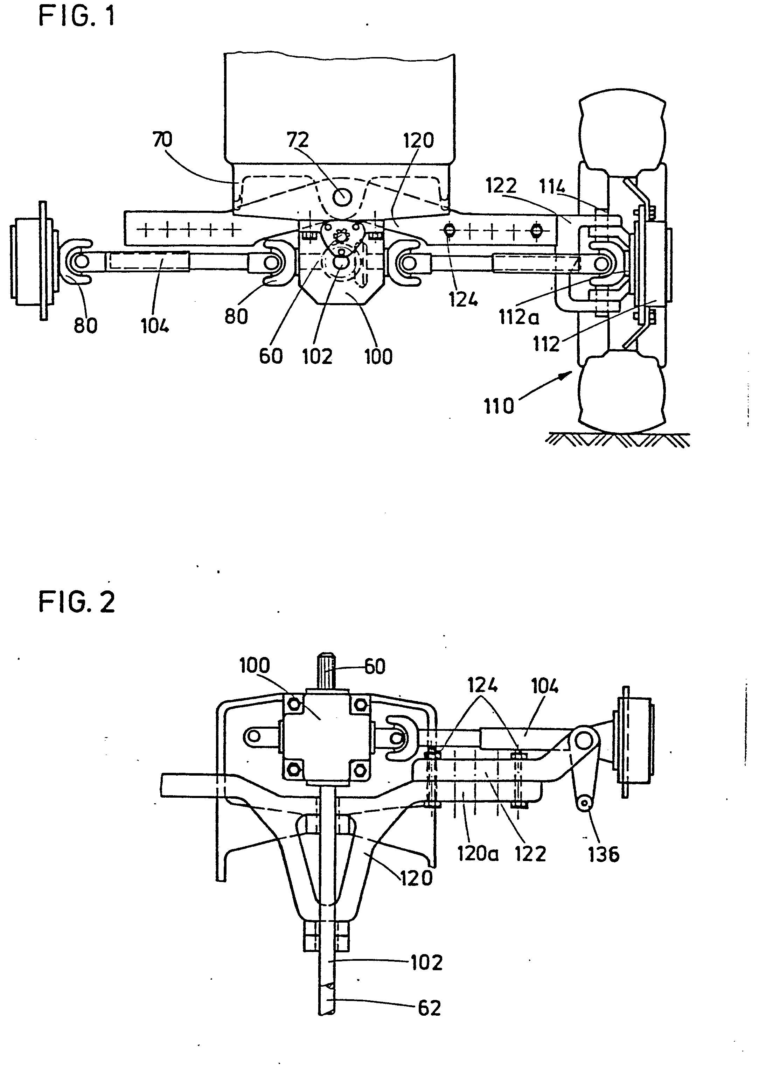

              Fig. 2 in der Ansicht von unten,

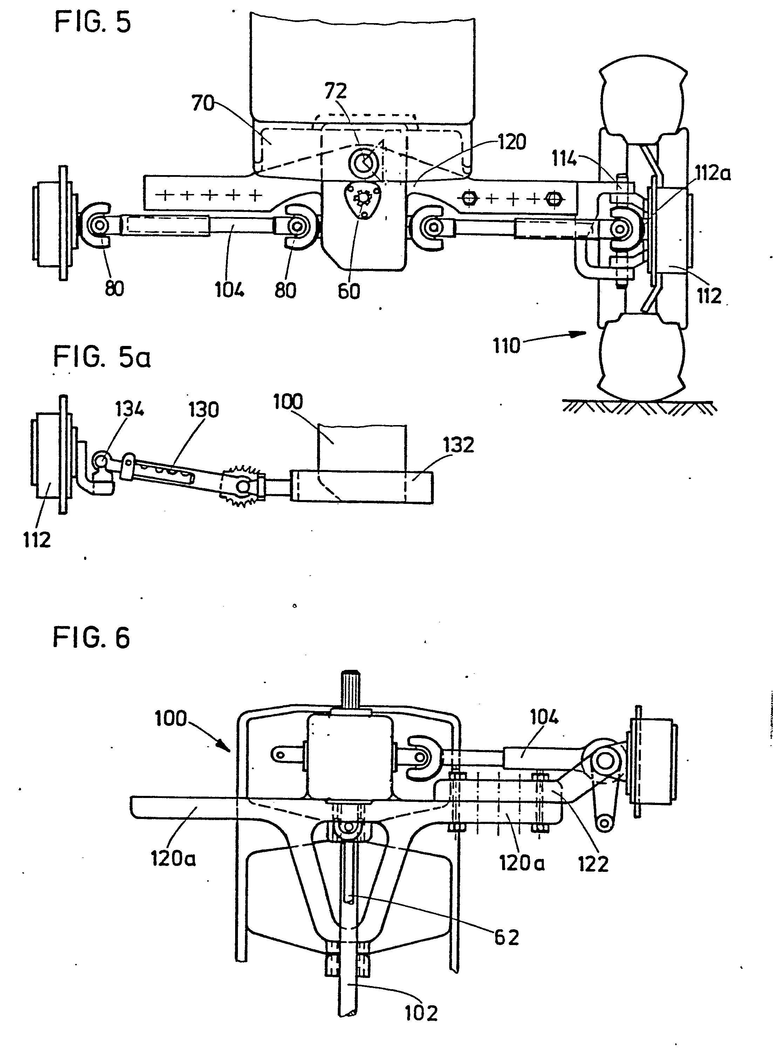

Fig. 5        eine Ansicht der Vorderachse von vorn,
              wobei Getriebegehäuse und Achsmittelstück baulich bereinigt beide pendelnd
              am Tragbock angebracht sind,

Fig. 5a       eine zu Fig. 5 gehörige, der besseren
              Übersicht wegen gesonderte Ansicht auf
              die zur Radlenkung gehörigen Teile,

Fig. 6        eine Ansicht der in Fig. 5 gezeigten
              Ausführungsform von unten,

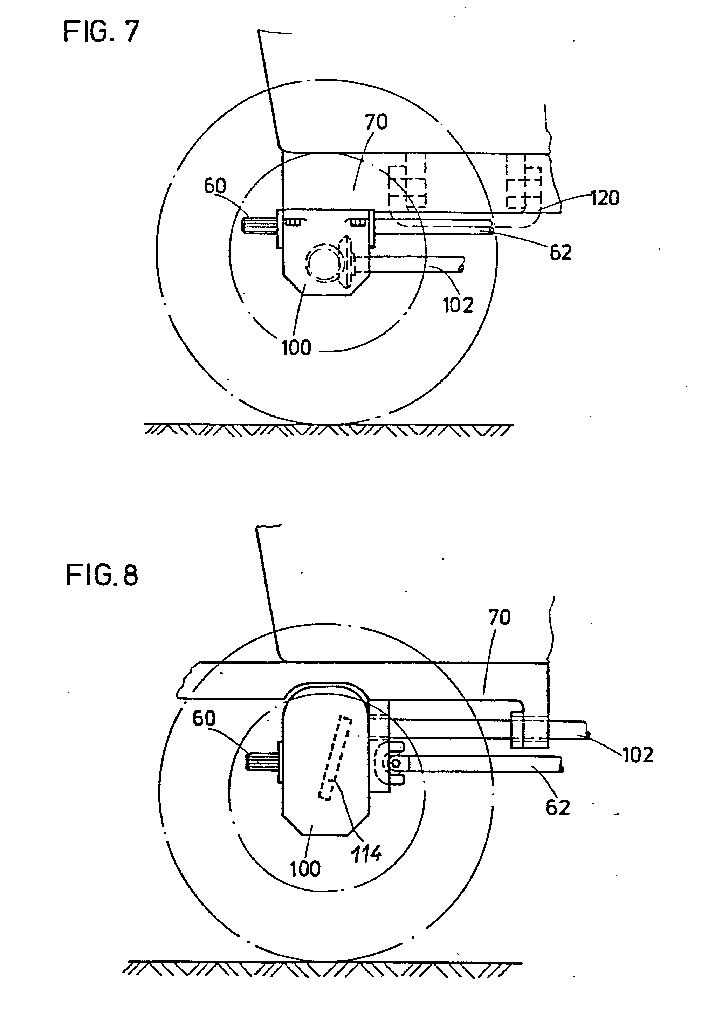

Fig. 7        eine Teilansicht der in Fig. 1 gezeigten Ausführungsform von der Seite,

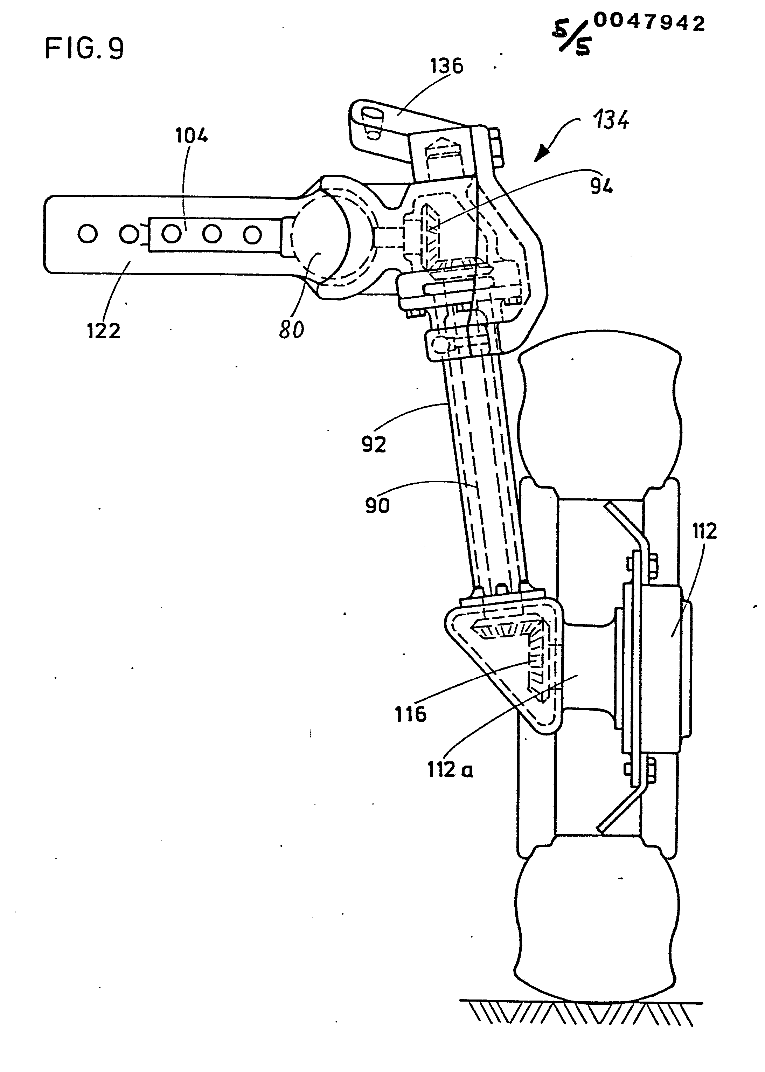

Fig. 8        eine Teilansicht der in Fig. 5 gezeigten Ausführungsform von der Seite,

Fig. 9        eine Teilansicht einer Portalachse als
              Ansicht von vorne.

Fig. 1 zeigt eine Vorderansicht der Vorderachse, wobei die linke Figurenhälfte nur teilweise dargestellt ist. In der Mitte oben ist die nicht näher bezeichnete Frontverkleidungsplatte angedeutet, darunter ist der mit 70 bezeichnete Tragbock sichtbar, in der Mitte das mit 72 bezeichnete Pendellager, an dem das Achsmittelstück 120 pendelnd gelagert ist. Das Achsmittelstück 120 setzt sich links und rechts fort und weist eine nicht näher bezeichnete Lochleiste auf, an der die linke und rechte Halbachse 122 mittels Schraubbolzenverbindungen 124 verstellbar befestigbar sind. Die gezeigte Lochleiste ist für fünf verschiedene Spurweiten geeignet. Eine übereinander angeordnete Doppellochleiste kann sich empfehlen. Die Achsanschlußstücke des im allgemeinen gegossen hergestellten Achsmittelstückes weisen bevorzugt ein rechteckiges Vollprofil mit Führungsnut für die anzuschließende, einen entsprechenden Führungssteg aufweisende Halbachse 122 auf. Auch Hohlprofile sind grundsätzlich verwendbar. Dabei empfiehlt sich eine Umklammerung von Achsanschlußstück 120a und Halbachsen 122, um beim Herausnehmen der Bolzen die Verbindung der Achsen sicherzustellen. Bezüglich der Profilform der linken und rechten Halbachse 122, die in eine Gabel mündet, an der über Achsschenkelbolzen 114 die Vorderräder 110 befestigt sind, gilt Entsprechendes. Die Achsschenkelbolzen 114 sind vorteilhafterweise zur Erreichung eines größeren Radeinschlages des kurveninneren Vorderrades nach hinten geneigt in der Ebene der Fahrzeuglängsachse im Sinne eines übergroßen Nachlaufes mit 10 bis 30 Grad, vorzugsweise 11 bis 15 Grad (vgl. Fig. 8).

Das Getriebegehäuse 100 ist entweder z.B. mittels Bolzen fest am Tragbock befestigt - wie hier und in Fig. 2 gezeigt - oder mit dem Tragbock baulich vereinigt, insbesondere im Sinne einer Gußkonstruktion.

Mit 102 ist die gangabhängige vom Hauptgetriebe nach vorne laufende Welle bezeichnet, die in das Getriebegehäuse 100 mittig mündet und von dort über das nicht näher gezeigte Frontgetriebe über je ein Kreuzgelenk 80 die drehfest verschiebbaren Antriebswellen 104 antreibt. Die linke und rechte Antriebswelle 104 sind in den Figuren als Teleskopwelle gezeigt. Sie besteht im allgemeinen aus ineinander schiebbaren Vieleckprofilen, die gegeneinander z.B. mittels Wälzkörper längsverschiebbar sind.

Ihre Verstellbarkeit in axialer Richtung in Angleichung an die verschiedenen Spurweiten benötigt daher im allgemeinen keine besonderen Maßnahmen.

Die Antriebswellen 104 treiben über ein weiteres Kreuzgelenk 80 und den Achszapfen 112a das Rad-Planetengetriebe 112 an. Statt der Kreuzgelenke können selbstverständlich auch homokinetische Gelenke verwendet werden.

Die Antriebswellen 104 liegen, wie in Verbindung mit Fig. 2 ersichtlich, etwas vor und unterhalb der tragenden Halbachsen 122 und werden im Bereich des Vorderrades von den dort gabelförmig ausgebildeten Halbachsen 122 umgriffen. In den Figuren sind diese so dargestellt, daß ein Blick auf die durchlaufenden Antriebswellen 104 möglich ist. Die Achse des radseitigen Kreuzgelenkes 80 muß mit der Achse des Achsschenkelbolzens 112 zusammenfallen. Dabei braucht diese Achse nicht notwendigerweise genau senkrecht ausgebildet werden, vielmehr kann sich in bekannter Weise eine Neigung um beispielsweise 5 Grad nach innen oben und weiterhin eine Neigung dieser Achse um ca. 12 Grad nach hinten oben aus Gründen eines kleineren Wendekreises empfehlen.

Schließlich ist in Fig. 1 noch die für die frontseitig angebrachten Geräte benötigte Zapfwelle 60 zu sehen, die hier in dem am Tragbock 70 befestigten Getriebegehäuse 100 gelagert ist. Die aus Fig. 2 ersichtliche Verlängerung der Zapfwelle 60 ist dort mit 62 bezeichnet und läuft oberhalb der vom Hauptgetriebe kommenden Welle 102 nach hinten. Die Welle 62 ist normalerweise gangunabhängig und weist bevorzugt eine etwa konstante Drehzahl von z.B. 1000 U/min. auf.

In Fig. 2, welche die in Fig. 1 gezeigte Ausführungsform von unten zeigt, wird zusätzlich noch der Lenkhebel 136 sichtbar, an den die nicht gezeichnete Lenkspurstange angreift. Das feststehende Gehäuse 100 kann glockenförmig im wesentlichen einteilig oder ggf. auch zweiteilig mit separatem Deckel ausgebildet sein.

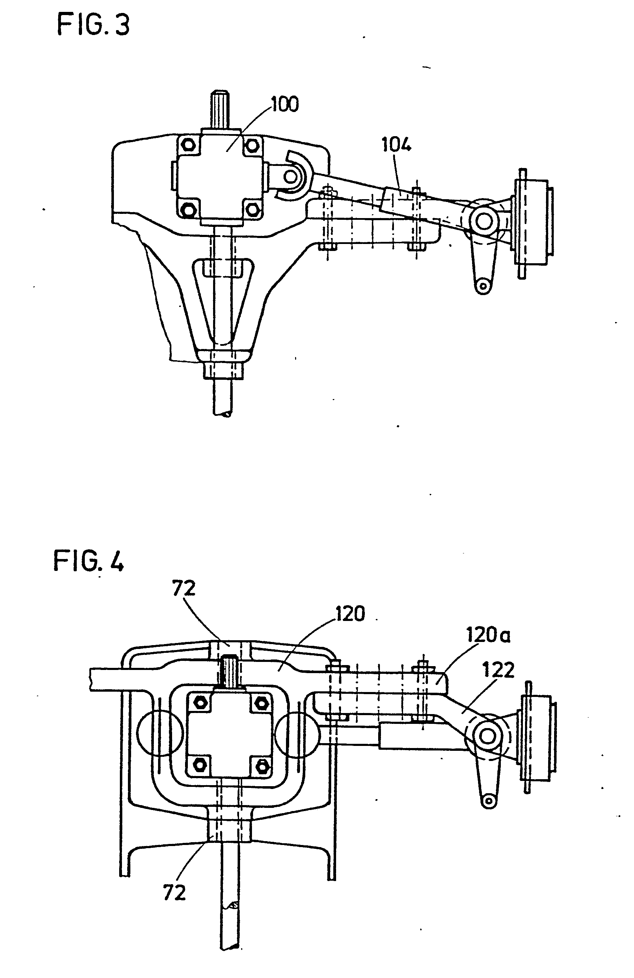

Fig. 3 zeigt ebenfalls eine Ansicht von unten, wobei gegenüber der Ausführungsform nach Fig. 1 und 2 eine Änderung dahingehend vorgenommen ist, daß die Antriebswellen 104 nach hinten um einen Winkel von etwa 7 bis 15 Grad abgewinkelt sind, um einen vergrößerten Einschlagwinkel des jeweiligen kurvenineren Vorderrades zu erreichen. Die linke Seite der Fig. 3 ist zeichnerisch nicht im Detail ausgeführt, sie ist syymetrisch zur Mittelachse zu denken.

Fig. 4 zeigt eine Variante des Achsmittelstückes 120 in der Ansicht von unten. Während Fig. 3 ein Achsmittelstück in üblicher Ausführung zeigt, das zweifach hinter dem festsitzenden Getriebegehäuse 100 gelagert ist, ist in Fig. 4 ein Achsmittelstück 120 gezeigt, das das Getriebegehäuse 100 rahmenartig umgreift und vor und hinter diesem mittels eines Pendellagers 72 pendelnd gelagert ist. Diese Anordnung benötigt gegenüber der herkömmlichen nach Fig. 3 einen geringeren Platzbedarf. In Fig. 4 ist die linke symmetrisch zu denkende Bildhälfte nicht gezeichnet, die Kreugelenke sind nur schematisch angedeutet.

Fig. 5 zeigt eine Ansicht der Vorderachse von vorne wobei Getriebegehäuse und Achsmittelstück 120 baulich vereinigt und beide mittels des Lagers 72 pendelbeweglich angebracht sind. Getriebegehäuse und Achsmittelstück 120 können aus einem Stück gegossen sein. Die Oberseite des Getriebegehäuses 100 pendelt - wie insbesondere in Fig. 8 dargestellt - in einer Ausnehmung des Tragbocks 70. Die Ausnehmung kann bei entsprechender Gestaltung des Getriebegehäuses 100

- 11 -          D-8202

selbstverständlich auch entfallen. Zum Verständnis der Darstellung kann ansonsten auf das zu Fig. 1 Gesagte verwiesen werden.

In Fig. 5a ist eine zu Fig. 5 gehörige, der besseren Übersicht wegen gesondert dargestellte Ansicht auf die zur Lenkung des Rades gehörigen Teile dargestellt. Der Lenkzylinder 132 kann - wie angedeutet - direkt unten am pendelnden Getriebegehäuse angebracht sein. Der Lenkzylinder wirkt über ein z.B. mit Faltenbalg geschütztes Gelenk auf die Lenkspurstange 130,die ihrerseits über die nicht näher dargestellten Lenkhebel auf den Kugelgelenkkopf 134 einwirkt. Die Lenkspurstange 130 ist in Anpassung an die axiale Spurenverstellbarkeit der Vorderachse entsprechend - z.B. fünffach - verstellbar, zweckmäßig in Teleskopbauweise wie gezeigt. Die Verstellung erfolgt am zweckmäßigsten mittels Klemmstücken, z.B. Schrauben, die formschlüssig in das innenlaufende Profil in entsprechenden Abständen einrasten.

Fig. 6 zeigt eine Ansicht der in.Fig. 5 gezeigten Ausführungsform von unten mit den am Achsmittelstück bzw. Getriebegehäuse angegossenen Achsanschlußstücken 120a. Die mittels zweier Schraubbolzenverbindungen angeflanschte Halbachse ist wiederum mit 122 bezeichnet.

Fig. 7 zeigt eine Teilansicht der in Fig. 1 dargezeigten Ausführungsform von der Seite. Unterhalb der seitlich gesehenen Frontverkleidungskante befindet sich der Tragbock 70. Das hinter dem Getriebegehäuse liegende Achsmittelstück 120 ist - wie ersichtlich - zweifach am Tragbock gelagert. Die Zapfwelle 60 für die frontseitig angebrachten Geräte durchsetzt das Getriebegehäuse und läuft oberhalb der Welle 102 für das Frontgetriebe nach hinten.

Fig. 8 zeigt eine Teilansicht der in Fig. 5 gezeigten Ausführungsform, wiederum von der Seite. Der Tragbock 70 ist nur angedeutet. Die Zapfwelle 60, die sich über ein Gelenk in der zugehörigen Triebwelle 62 fortsetzt, ist unterhalb der Welle 102 angeordnet. Die bevorzugte Neigung des Achsschenkelbolzens 114 in der Ebene der Fahrzeuglängsachse im Sinne eines übergroßen Nachlaufes ist ersichtlich. Zusätzlich kann sich eine weitere Neigung aus der Senkrechten im Sinne der Spreizung empfehlen.

Fig. 9 zeigt eine Teilansicht einer Portalachse von vorne, wobei nur die wesentlich erscheinenden Teile näher bezeichnet sind. Oben links mündet die rechte Antriebswelle 104 über ein Kreuzgelenk 80 und ein Kegelrad 94 in das Gehäuse 92, das die etwa senkrecht stehende Königswelle 90 umschließt. Die Königswelle ihrerseits treibt wiederum über ein Kegelrad das mit dem Achszapfen 112a des Planetengetriebes 112 verbundene Kegelrad 116 an. Die hinter der Antriebswelle 104 angedeutete Halbachse 122 stützt sich auf der Gehäusekonstruktion 92 ab. Der Kugelgelenkkopf 134 greift an dem drehbar gelagerten Gehäuse 92 an. Eine derartige Ausbildung der Portalachse ermöglicht die für manche Ackerschlepper bevorzugte große Bodenfreiheit.

PATENTANSPRÜCHE

1. Landmaschine, insbesondere Traktor, mit mechanisch angetriebener spurverstellbarer Vorderachse, deren Tragachse (120, 120a, 122) und Seitenwellen (104) mehrteilig und in axialer Richtung längenverstellbar ausgebildet sind, wobei zumindest die Tragachse (120 etc.) pendelnd am Fahrzeugrahmen (70) aufgehängt ist und das zum Frontantrieb gehörige Differential- und Winkel-Getriebe (vgl. 100) über eine vom Hauptgetriebe nach vorne geführte Welle (102) antreibbar und etwa in Achsmitte angeordnet ist, d a d u r c h   g e k e n n z e i c h n e t,   daß Trag- und Treibfunktion der Vorderachse von baulich weitgehend voneinander getrennten, separat voneinander zu  den Vorderrädern (110) verlaufenden und gesondert bezüglich Spurbreite zu verstellenden Komponenten (104, 120, 120a, 122) wahrgenommen werden.

2. Landmaschine nach Anspruch 1,  d a d u r c h   g e k e n n z e i c h n e t,   daß das zur Vorderachse gehörige Achsmittelstück (120) pendelnd am Tragbock (70) befestigt ist und Anschlußstücke (120a) für eine linke und rechte Halbachse (122) aufweist, und daß in unmittelbarer Nachbarschaft, jedoch wahlweise getrennt, ein Gehäuse (100) für das Differential- und Winkelgetriebe vorgesehen ist, dessen linke und rechte Antriebswellen (104) getriebe- und radseitig gelenkig angeschlossen sind und außerhalb sowie etwa parallel zur tragenden Achskonstruktion (120, 122) verlaufen.

3. Landmaschine nach Anspruch 1 oder 2, d a d u r c h   g e k e n n z e i c h n e t,   daß die im wesentlichen senkrechte Achse des gelenkig ausgebildeten Anschlusses der linken und rechten Antriebswelle (104) an den Achszapfen des anzutreibenden Rades (110) bzw. den Wellenzapfen (112a) des anzutreibenden zugehörigen Planetengetriebes (112) mit der Achse des Achsschenkelbolzens (114) zusammenfällt.

4. Landmaschine nach mindestens einem der vorangehenden Ansprüche, d a d u r c h   g e k e n n - z e i c h n e t,   daß die Tragachs-Komponenten (120a, 122) zumindest im Bereich der Spurverstellbarkeit eine unrunde, gegen hohe Drehmomente unempfindliche Form aufweisen.

5. Landmaschine nach Anspruch 4, d a d u r c h   g e k e n n z e i c h n e t,   daß die Achsanschlußstücke (120a) für die Halbachsen (122) ebenso wie die Halbachsen selbst ein Vierkant-Profil aufweisen, vorzugsweise gleicher Größe für eine nebeneinander in verstellbaren Abständen vorzunehmende lösbare Befestigung.

6. Landmaschine nach Anspruch 4, d a d u r c h   g e k e n n z e i c h n e t,   daß die Achsanschlußstücke (120a) für die Halbachsen (122) für Teleskopverbindung, insbesondere in Form von Sechskantrohren, ausgebildet sind.

7. Landmaschine nach mindestens einem der vorangehenden Ansprüche,      d a d u r c h
g e k e n n z e i c h n e t,      daß die Achsanschlußstücke (120a) für die Halbachsen (122) ebenso wie die
Halbachsen selbst mindestens eine Lochleiste für eine
lösbare Schraubbolzenverbindung (124) aufweisen.

8. Landmaschine nach mindestens einem der vorangehenden Ansprüche,      d a d u r c h
g e k e n n z e i c h n e t,      daß das gesondert vom
Achsmittelstück ausgebildete Getriebegehäuse (100) am
Tragbock (70) befestigt ist (Fig. 1, 2, 3, 7).

9. Landmaschine nach mindestens einem der vorangehenden Ansprüche,  insbesondere Anspruch 8,
d a d u r c h      g e k e n n z e i c h n e t,      daß
das Achsmittelstück (120) rahmenartig das feststehende
Getriebegehäuse (100) umgibt und vor und hinter diesem
je ein Pendellager (72) vorgesehen ist, deren miteinander fluchtende Drehpunkte in der Mittellinie der
Fahrspur liegen (Fig. 4).

10. Landmaschine nach mindestens einem der Ansprüche
1 bis 8,   d a d u r c h      g e k e n n z e i c h n e t,
daß Achsmittelstück (120) und Getriebegehäuse (100)
baulich vereinigt und beide pendelnd am Tragbock (70)
befestigt sind (Fig. 5, 6, 8).

11. Landmaschine nach Anspruch 10,   d a d u r c h
g e k e n n z e i c h n e t,      daß an das gegossene
Getriebegehäuse (100) links und rechts ein Achsanschlußstück (120a) für die linke und rechte Halbachse (122)
angegossen ist.

12. Landmaschine nach mindestens einem der vorangehenden Ansprüche, d a d u r c h  g e k e n n - z e i c h n e t, daß die Längsverstellung der linken und rechten Antriebswelle (104) teleskopartig erfolgt.

13. Landmaschine nach mindestens einem der vorangehenden Ansprüche, d a d u r c h  g e k e n n - z e i c h n e t, daß die linke und rechte Antriebswelle (104) getriebe- und radseitig mit Gelenken (80) versehen und nach hinten um einen Winkel von 7° bis 15° abgewinkelt sind (Fig. 3).

14. Landmaschine nach mindestens einem der vorangehenden Ansprüche, d a d u r c h  g e k e n n - z e i c h n e t, daß die Antriebswellen (104) drehfest längsverschiebbar ausgebildet sind und bevorzugt eine Überlastkupplung aufweisen.

15. Landmaschine nach mindestens einem der vorangehenden Ansprüche, d a d u r c h  g e k e n n - z e i c h n e t, daß die Zapfwelle (60) für die frontseitig aufbaubaren Geräte im Getriebegehäuse (100) gelagert ist.

16. Landmaschine nach Anspruch 15, d a d u r c h g e k e n n z e i c h n e t, daß der Zapfwellentrieb (62) unterhalb oder oberhalb der vom Hauptgetriebe nach vorne gehenden Welle (102) das Getriebegehäuse (100) durchdringt (Fig. 7 und 8).

17. Landmaschine nach mindestens einem der vorangehenden Ansprüche, deren Frontgetriebegehäuse (100) feststehend am Tragbock (70) befestigt ist, d a d u r c h   g e k e n n z e i c h n e t ,   daß die Antriebswellen (104) einen leichtgängigen Längenausgleich aufweisen, insbesondere unter Verwendung von Wälzkörpern.

18. Landmaschine nach mindestens einem der vorangehenden Ansprüche,   d a d u r c h   g e k e n n - z e i c h n e t ,   daß die Vorderachse als Portalachse ausgebildet ist  und die Antriebswellen (104) zunächst entlang den im wesentlichen horizontal nach außen verlaufenden Achsanschlußstücken (120a) angeordnet sind, wobei die Antriebswellen (104) dann über ein Kegelrad (94) in eine an sich bekannte nach unten gerichtete Königswelle (90), und die tragenden Halbachsen (122) in das die Königswelle umgebende rohrförmige Gehäuse (92) übergehen (Fig. 9).

FIG. 1

FIG. 2

FIG. 3

FIG. 4

FIG. 5

FIG. 5a

FIG. 6

FIG. 7

70

60

120

62

102

100

FIG. 8

70

60

102

62

114

100

FIG.9